# FASCICULE DE BREVET EUROPEEN

(11) **EP 2 627 870 B1**
(45) Date de publication et mention de la délivrance du brevet: **10.12.2014**
(21) Numéro de dépôt: 11832103.3
(22) Date de dépôt: 12.10.2011
(51) Int. Cl.: F01D 21/04, F01D 25/16, F04D 29/056, F02C 7/06

(54) **BOITIER DE LIAISON ENTRE UN ARBRE D'ENTRAINEMENT DE SOUFFLANTE DE MOTEUR ET UN PALIER DE ROULEMENT**
ANSCHLUSSMODUL ZWISCHEN EINER ANTRIEBSWELLE EINES MOTORLÜFTERS UND EINEM WÄLZLAGER
CONNECTING MODULE BETWEEN A DRIVE SHAFT OF AN ENGINE FAN AND A ROLLING ELEMENT BEARING

(30) Priorité: 13.10.2010 FR 1058350
(43) Date de publication de la demande: 21.08.2013
(73) Titulaire: Snecma, 75015 Paris (FR)
(72) Inventeur: ANTUNES, Serge, Louis, F-77550 Moissy-Cramayel Cedex (FR); MOULY, François, F-77550 Moissy-Cramayel Cedex (FR)
(74) Mandataire: Ilgart, Jean-Christophe
(86) Numéro de dépôt international: PCT/FR2011/052378
(87) Numéro de publication internationale: WO 2012/049422

(56) Documents cités:
- EP-A2- 1 013 896
- EP-A2- 1 564 352
- FR-A1- 2 115 316
- US-A1- 2003 210 979

## Description

### DOMAINE TECHNIQUE

La présente invention se rapporte au domaine des moteurs d'aéronef à soufflante(s), et, plus particulièrement, aux moyens mis en oeuvre au sein de ces moteurs pour faire face au balourd provoqué par une perte d'aube de soufflante. Cette problématique est abordée notamment dans les documents EP 1 653 051, EP 1 916 431, FR 2 752 024, US 2003/0210979 et FR 2 888 621.

L'invention s'applique en particulier aux turboréacteurs.

### ETAT DE LA TECHNIQUE ANTERIEURE

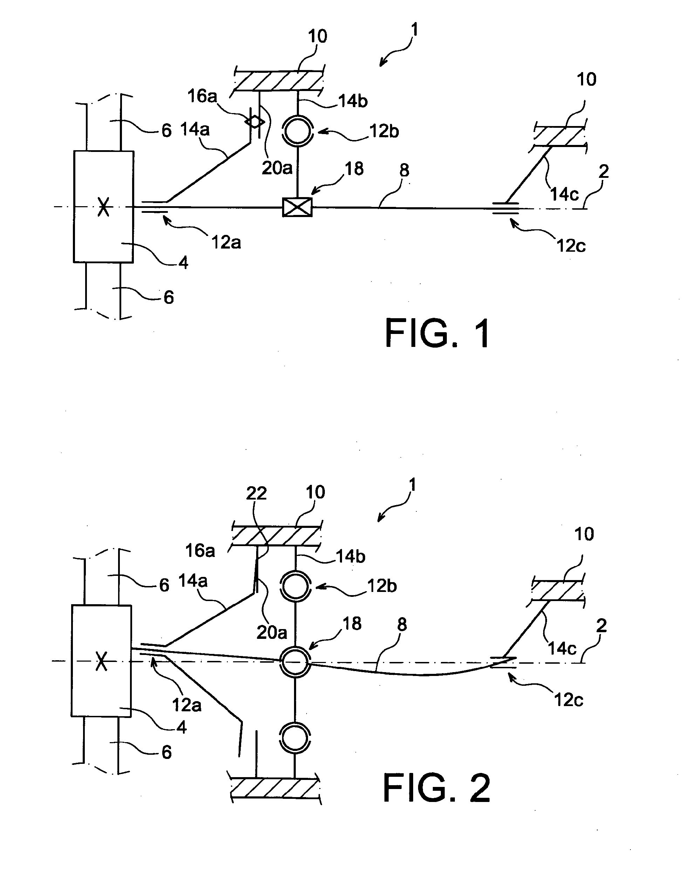

En référence à la figure 1, on peut apercevoir de manière schématique une partie d'un turboréacteur 1 pour aéronef, de conception connue de l'art antérieur.

De façon conventionnelle, ce turboréacteur 1 présente un axe longitudinal 2 sur lequel sont centrés un rotor de soufflante 4 portant des aubes de soufflante 6, ainsi qu'un arbre d'entraînement 8 solidaire en rotation du rotor 4, également appelé disque de soufflante.

Le turboréacteur 1 comporte également un carter / stator 10 formant une enveloppe rigide fixe, ce carter étant représenté de manière très schématique sur la figure 1. Pour assurer le maintien et le guidage de l'arbre 8, il est prévu trois paliers de roulement espacés les uns des autres selon la direction de l'axe 2, ces paliers étant respectivement référencés, de l'avant vers l'arrière, 12a, 12b et 12c.

La bague extérieure de chacun de ces trois paliers de roulement est fixée au carter 10 par des moyens de raccord référencés respectivement 14a, 14b et 14c. ces moyens de raccord prennent chacun la forme d'un support de palier formant une structure annulaire reliant la bague extérieure directement au carter, ou à une extension interne de ce dernier, tel que cela est le cas pour le palier avant 12a, situé le plus prêt du rotor 4.

Le palier le plus avant 12a et le palier le plus arrière 12c sont chacun prévus pour reprendre des efforts radiaux, tandis que le palier de roulement intermédiaire 12b est également prévu pour assurer la rétention axiale de l'arbre 8.

Pour ce qui concerne le palier avant 12a, son support de palier 14a est relié au carter 10 par une liaison mécanique fusible 16a. Cette liaison est par exemple réalisée à l'aide de vis, dont le nombre, le dimensionnement et la position sont retenus de manière à pouvoir conférer le caractère fusible désiré, qui sera explicité ci-après.

En configuration normale de vol telle que schématisée sur la figure 1, la liaison mécanique fusible 16a est suffisamment résistante pour supporter les efforts radiaux transmis par le palier avant 12a, servant à maintenir la rotation de l'arbre 8 selon l'axe longitudinal 2 du turboréacteur.

Un cas de problème exceptionnel conduisant à la perte d'une ou plusieurs aubes de soufflante 6, le rotor 4 subit un balourd qui provoque des efforts radiaux extrêmement élevés dans les structures du turboréacteur, et en particulier dans les supports de palier 14a, 14b et 14c.

Comme cela a été évoqué précédemment, la liaison mécanique fusible 16a est prévue pour rompre lorsque le support 14a est soumis à ces efforts radiaux extrêmement élevés, de grandeur prédéterminable. En référence à la figure 2, la conséquence quasi-immédiate de ces ruptures réside dans le débattement radial du rotor 4. L'arbre d'entraînement 8, qui continue à être retenu au niveau de l'axe 2 par le palier intermédiaire 12b et par le palier arrière 12c, suit le débattement du rotor en subissant une flexion. A cet égard, un boîtier de liaison 18 interposé entre l'arbre 8 et le palier intermédiaire 12b est capable de se transformer en liaison rotule après la perte d'aube, suite à la rupture d'un fusible mécanique, comme cela sera expliqué ci-après. Cela favorise alors une flexion plus saine de l'arbre, puisqu'un noeud de flexion se crée au niveau de ce palier intermédiaire formant liaison rotule, comme cela a été schématisé sur la figure 2.

L'amplitude de la flexion est limitée par de multiples contacts du rotor avec des zones du stator prédéfinies à la conception de l'architecture de la turbomachine. Elle est aussi limitée par la butée axiale du support 14a contre l'extension de carter 20a, qui supportait initialement la liaison fusible 16a. Cet état, montré sur la figure 2, fait donc apparaître un contact ponctuel 22 entre le support 14a et l'extension de carter 20a, cette dernière prenant la forme d'une piste de roulement annulaire.

Une fois le contact établi, l'arbre 8 subit, de façon connue de l'homme du métier, un mouvement de précession durant lequel il continue à tourner sur lui-même tout en restant en flexion, et tourne donc également autour de l'axe longitudinal 2 duquel il reste décalé angulairement, sauf au niveau des deux paliers 12b, 12c qui continuent à guider et à centrer ponctuellement cet arbre 8 sur l'axe 2.

Le mouvement de précession de l'arbre 8 et de son rotor 4, combiné au contact des éléments 14a, 20a, conduit le support 14a à être animé d'un mouvement relatif par rapport à l'extension de carter 20a. Ce mouvement relatif est un roulement, habituellement sans glissement du fait des efforts de contact très élevés.

La conception telle que décrite ci-dessus est prévue pour assurer un découplage mécanique aussi rapide que possible. Ainsi, il est par exemple fait en sorte qu'une durée de l'ordre de la milliseconde ne soit pas excédée entre l'instant de la perte de l'aube de soufflante 6, et l'instant de la rupture de la liaison mécanique fusible 16a.

Ainsi, ce système de découplage mécanique permet, malgré le fort balourd résultant de la perte d'aube, de préserver l'intégrité des structures du turboréacteur.

Comme cela a été mentionné ci-dessus, il est prévu un boîtier de liaison 18 entre l'arbre d'entraînement 8 du rotor de soufflante 4 et le palier de roulement intermédiaire 12b. Ce boîtier comprend essentiellement une liaison rotule qui est maintenue dans un état bloqué en conditions normales de vol. Pour ce faire, le boîtier comporte d'une part une structure annulaire intérieure fixée sur l'arbre d'entraînement et présentant une portée sphérique, et d'autre part une structure annulaire extérieure fixe par rapport à une bague intérieure du palier de roulement intermédiaire. De plus, cette structure extérieure délimite une piste de forme complémentaire de celle de la portée sphérique, de manière à former conjointement ladite liaison rotule. De plus, la structure extérieure est en appui radial sur la structure intérieure par le biais d'un contact entre la piste sphérique et la piste de forme complémentaire, qui sont ajustées serrées.

En outre, pour maintenir la liaison rotule dans l'état bloqué, il est prévu des pions fusibles entre les structures intérieure et extérieure du boîtier. L'inconvénient principal de cette solution réside dans le fait qu'une fois la liaison rotule débloquée, son fonctionnement peut être perturbé par les efforts résistants dus à l'ajustement serré qui subsiste entre les pistes sphériques. De plus, la maîtrise du changement d'état de la liaison rotule est délicate, et nécessite des mises au point longues et coûteuses.

### EXPOSÉ DE L'INVENTION

L'invention a donc pour but de remédier au moins partiellement aux inconvénients mentionnés ci-dessus, relatifs aux réalisations de l'art antérieur.

Pour ce faire, l'invention a pour objet un boîtier de liaison destiné à être interposé entre un arbre d'entraînement de rotor de soufflante de moteur d'aéronef et un palier de roulement prévu pour reprendre des efforts radiaux et axiaux, ledit boîtier comportant d'une part une structure annulaire intérieure destinée à être fixée sur ledit arbre d'entraînement et présentant une portée sphérique, et d'autre part une structure annulaire extérieure destinée à être fixe par rapport à une bague intérieure dudit palier de roulement, cette structure extérieure, en appui radial sur des moyens de support radial prévus sur la structure intérieure, délimitant une piste de forme complémentaire de celle de ladite portée sphérique de manière à former conjointement une liaison rotule maintenue dans un état bloqué par un dispositif de blocage comportant un organe de blocage prévu sur la structure intérieure, cet organe de blocage faisant saillie radialement vers l'extérieur à partir de la portée sphérique et pénétrant dans ladite structure extérieure, des moyens formant fusible mécanique assurant la jonction entre l'organe de blocage et la portée sphérique, de manière à ce que ladite liaison rotule soit libérée suite à la rupture de ces moyens formant fusible.

Selon l'invention, les moyens de support radial sont pratiqués sur ledit organe de blocage.

Ainsi, l'invention tire sa particularité de la conception des moyens de support radial, qui sont agencés sur l'organe de blocage de la liaison rotule. Cela contraste donc avec la solution de l'art antérieur décrite ci-dessus, dans laquelle les moyens de support radial étaient constitués par les pistes sphériques de la liaison rotule. Ici, les pistes sphériques ne remplissent plus cette fonction, de sorte qu'il n'existe avantageusement plus d'ajustement serré entre celles-ci. Par conséquent, une fois la liaison rotule débloquée par la rupture des moyens formant fusible mécanique, cette liaison rotule peut fonctionner de manière optimale sans être perturbée par la présence d'efforts résistants importants.

En outre, la solution apportée par la présente invention permet une meilleure maîtrise du changement d'état de la liaison rotule.

L'invention est aussi avantageuse en ce qu'elle est facile à mettre au point, et aisément adaptable à toutes les technologies de moteurs d'aéronef à soufflante(s), en particulier les turboréacteurs.

De préférence, ledit organe de blocage assure également la rétention axiale de la structure annulaire intérieure par rapport à la structure annulaire extérieure. Une fois la liaison rotule libérée, la reprise des efforts axiaux devient assurée par les pistes sphériques formant cette liaison rotule.

De préférence, ledit organe de blocage assure également la rétention de la structure annulaire intérieure par rapport à la structure annulaire extérieure, dans la direction tangentielle.

De préférence, ledit organe de blocage est une couronne. Il pourrait alternativement s'agir d'une pluralité d'éléments espacés circonférentiellement les uns des autres, sans sortir du cadre de l'invention. A titre d'exemple, la couronne pourrait être interrompue circonférentiellement.

De préférence, la couronne présente des passages traversants espacés circonférentiellement les uns des autres. Ces passages permettent d'affaiblir la résistance mécanique de la jonction entre la couronne et la portée sphérique, ce qui facilite la formation d'une zone fusible mécanique.

De préférence, l'organe de blocage est agencé dans un logement de la structure extérieure, et ledit dispositif de blocage comporte en outre des pattes de rétention solidaires de cette structure extérieure, agencées dans ledit logement et traversant lesdits passages pratiqués dans la couronne. Cette solution, dite à crabotage, se révèle particulièrement intéressante pour assurer la rétention de la structure intérieure par rapport à la structure extérieure, dans la direction tangentielle.

De préférence, lesdits moyens de support radial prennent la forme d'une ou plusieurs pistes cylindriques. Ces pistes cylindriques peuvent être continues ou interrompues/segmentées selon la direction circonférentielle, sans sortir du cadre de l'invention. De préférence, elles sont agencées à la périphérie de l'organe de blocage.

De préférence, lesdits moyens formant fusible mécanique prennent la forme d'un rétrécissement de section.

En outre, l'invention se rapporte à un moteur d'aéronef comprenant un boîtier tel que décrit ci-dessus. De préférence, ce moteur comprend trois paliers de roulement interposés entre l'arbre d'entraînement du rotor de soufflante et le stator du moteur, ces trois paliers étant espacés axialement les uns des autres et intégrant un palier de roulement avant associé à un support de palier relié au stator du moteur par une liaison mécanique fusible, ainsi qu'un palier de roulement intermédiaire monté sur l'arbre d'entraînement de rotor de soufflante par ledit boîtier.

D'autres avantages et caractéristiques de l'invention apparaîtront dans la description détaillée non limitative ci-dessous.

### BRÈVE DESCRIPTION DES DESSINS

Cette description sera faite au regard des dessins annexés parmi lesquels ;
- la figure 1 représente une vue schématique en coupe longitudinale d'une partie d'un turboréacteur, selon une conception connue de l'art antérieur ;
- la figure 2 représente une vue similaire à celle de la figure 1, avec le turboréacteur se trouvant dans une configuration telle qu'adoptée après le découplage mécanique du palier avant suivant la perte d'une aube de soufflante ;
- la figure 3 représente une vue plus détaillée en demi-coupe d'un boîtier de liaison interposé entre le palier de roulement intermédiaire et l'arbre d'entraînement de rotor de soufflante d'un turboréacteur tel que celui montré sur les figures précédentes, le boîtier se présentant sous la forme d'un mode de réalisation préféré de l'invention ;

- la figure 4 représente une vue en perspective de la structure intérieure du boîtier de la figure 3 ;
- la figure 5 représente une vue éclatée en perspective du boîtier de la figure 3 ; et
- les figures 6a et 6b représentent des vues schématiques en demi-coupe de la structure intérieure du boîtier montré sur les figures 3 à 5, respectivement avant et après la rupture des moyens formant fusible mécanique.

### EXPOSÉ DÉTAILLÉ DE MODES DE RÉALISATION PRÉFÉRÉS

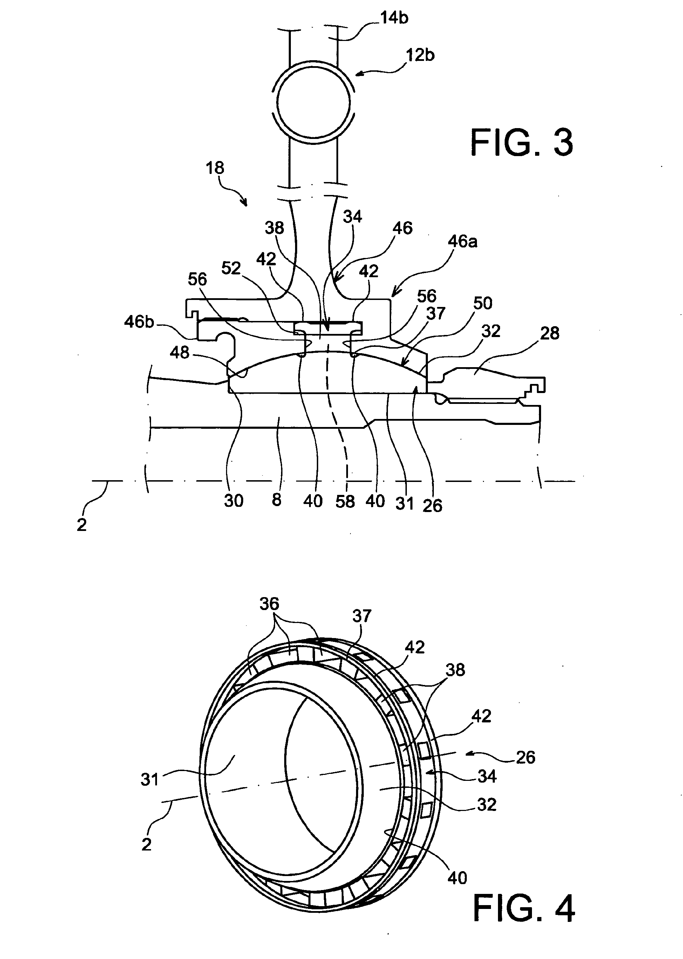

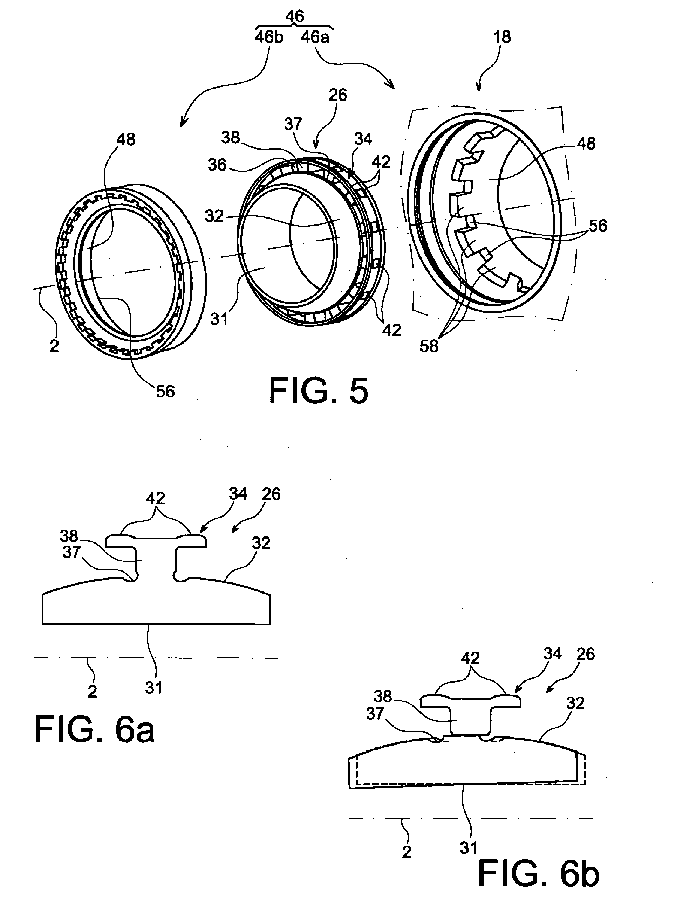

En référence aux figures 3 à 5, il est montré un boîtier de liaison 18 interposé entre le palier de roulement intermédiaire 12b et l'arbre d'entraînement 8 de rotor de soufflante d'un turboréacteur du type de celui montré sur les figures 1 et 2, le boîtier 18 se présentant sous la forme d'un mode de réalisation préféré de l'invention.

Les figures 3 à 5 montrent le boîtier 18 dans un état tel qu'adopté en conditions normales de vol, à savoir tant que la soufflante n'a pas perdu d'aube. Il comporte tout d'abord une structure annulaire intérieure 26, fixée sur l'arbre d'entraînement 8 qui la traverse au niveau d'un alésage 31 prévu à cet effet. Cette fixation s'effectue à l'aide d'un écrou de serrage 28 venant plaquer axialement la structure 26 contre un épaulement opposé 30 pratiqué sur l'arbre 8. Pour ce faire, l'écrou 28 est également situé autour de cet arbre 8, ce dernier étant préférentiellement de conception creuse.

A sa périphérie, la structure extérieure 26 présente une portée sphérique 32, également dite piste sphérique. Sa forme correspond en effet globalement à une sphère tronquée par deux plans parallèles, équidistants du centre de cette sphère, et orthogonaux à l'axe 2. La portée sphérique 32 est dédiée à la formation d'une liaison rotule maintenue bloquée en conditions normales de vol, comme cela sera décrit ci-après.

La structure intérieure 26 comporte en outre un organe de blocage 34 faisant saillie radialement vers l'extérieur à partir de la portée sphérique 32, qu'il sépare ainsi en deux parties symétriques par rapport à un plan orthogonal à l'axe 2 passant par le centre de la sphère. Cet organe de blocage 34 prend la forme d'une couronne centrée sur le centre de la sphère, cette couronne d'axe 2 présentant des passages traversants 36 situés radialement vers l'extérieur par rapport à la portée sphérique 32, et étant espacés circonférentiellement les uns des autres. La jonction entre la couronne 34 et la portée sphérique 32 s'effectue donc par la base 37 de plots 38 espacés circonférentiellement, et délimitant entre eux les passages 36. Les bases 37 sont prévues pour constituer conjointement des moyens formant fusible mécanique entre la couronne 34 et la portée sphérique 32. Pour ce faire, ces bases 37 peuvent présenter un rétrécissement de section par rapport à la section moyenne des plots 38, rétrécissement qui est par exemple obtenu à l'aide de deux usinages annulaires 40 centrés sur l'axe 2, pratiqués de part et d'autre de ces bases 37. Il est noté que ces usinages 40 forment des cavités annulaires dans lesquelles il est possible de stocker / d'accumuler du lubrifiant pour le bon fonctionnement de la liaison rotule, lorsque celle-ci devient active.

A la périphérie de la couronne 34, il est prévu des moyens de support radial d'une structure extérieure du boîtier, qui sera décrite ci-après. Ces moyens de support radial prennent ici la forme de deux pistes cylindriques 42, centrées sur l'axe 2. Ces deux pistes 42 sont espacées l'une de l'autre axialement, et agencées de manière à ce que les deux surfaces cylindriques de section circulaire qu'elles délimitent soient issues d'un même cylindre virtuel. Le nombre et la forme de ces pistes 42 peuvent adaptés aux contraintes et besoins rencontrés, sans sortir du cadre de l'invention.

Comme évoqué ci-dessus, le boîtier 18 comporte également une structure annulaire extérieure 46 fixe par rapport à une bague intérieure du palier de roulement intermédiaire 12b. Cette structure 46 peut être montée sur la bague intérieure de palier, ou réalisée d'une seule pièce avec cette bague.

La structure extérieure 46, entourant la structure intérieure 26, est de préférence réalisée à l'aide d'une première partie 46a et d'une seconde partie 46b montée sur la première, par exemple par vissage. Ces deux parties 46a, 46b délimitent ensemble une piste 48 de forme complémentaire de celle de la portée sphérique 32, au droit de laquelle elle se situe. Les pistes 32, 48 forment conjointement une liaison rotule 50 maintenue dans un état bloqué par la couronne 34 de la structure intérieure. En effet, cette couronne 34 pénètre dans un logement 52 de la structure extérieure 46, dans lequel cette couronne est retenue axialement, dans les deux sens. Pour ce faire, le logement 52, issu de la piste 48 au niveau de laquelle il débouche et s'étendant radialement vers l'extérieur dans l'épaisseur de la structure 46, présente deux butées axiales opposées 56 contre lesquelles la couronne 34 est plaquée. Ces deux butées opposées 56, pratiquées respectivement sur les deux parties 46a, 46b, s'étendent de manière annulaire autour de l'axe 2 et coopèrent plus précisément avec les plots 38 de la couronne 34. Ce serrage assure en particulier la rétention axiale de la structure intérieure 26 par rapport à la structure extérieure 46.

Le boîtier 18 intègre ainsi un dispositif de blocage de la liaison rotule, qui comporte l'organe 34 en forme de couronne, et le logement 52 de réception de cette couronne. Le dispositif de blocage est complété par un système du type à crabotage permettant la rétention tangentielle de la structure intérieure 26 par rapport à la structure extérieure 46, dans les deux sens. Pour ce faire, la première partie 46a de la structure extérieure 46 comporte des pattes de rétention 58 s'étendant chacune sensiblement axialement et étant espacées circonférentiellement les unes des autres. Ces pattes 58, issues de la partie 46a située en aval par rapport à la partie 46b, sont agencées dans le logement 52 et traversent les passages 36 pratiqués dans la couronne, en s'étendant vers l'amont. Il en résulte en effet un blocage des structures 26, 46 dans la direction circonférentielle, grâce à la coopération entre les plots 38 et les pattes 56 agencés en alternance selon cette même direction.

Dans cet état, la liaison rotule 50 est donc bien maintenue dans un état bloqué, qui lui interdit tout déplacement relatif entre les deux pistes sphériques 32, 48, entre lesquelles un faible jeu radial est prévu. Ce jeu est compatible de l'environnement thermique dans lequel la rotule est soumise dans le cas de rupture le plus critique du fonctionnement de la turbomachine. En effet, la structure extérieure 46 est en appui radial non pas par le biais des deux pistes sphériques 32, 48, mais par l'appui radial du fond du logement 52 sur les deux pistes cylindriques 42 de la couronne 34.

En cas de problème exceptionnel conduisant à la perte d'une ou plusieurs aubes de soufflante, le boîtier est soumis à des efforts axiaux et radiaux très élevés qui conduisent à la rupture des moyens formant fusible mécanique, constitués par les bases 37 des plots 38. La liaison rotule initialement maintenue à l'état bloqué est alors libérée, comme le montre la séquence des figures schématiques 6a et 6b. En effet, les rétentions axiale et tangentielle assurées par la couronne 34 deviennent inopérantes, en raison de l'absence de lien mécanique entre cette couronne 34 et la piste sphérique 32. Après cette rupture, le faible jeu radial initialement prévu entre les pistes sphériques peut être consommé, ce qui les conduit à se comporter comme une rotule, en glissant l'une sur l'autre, selon des angles qui peuvent être maîtrisés. En outre, un ou plusieurs contacts peuvent être observés entre les plots 38 et la piste sphérique 32 lors des mouvements de la rotule libérée, mais ils restent négligeables par rapport aux contacts entre les deux pistes sphériques. Alternativement, le non contact des plots 38 avec la portée sphérique peut être prédéfini à la conception en aménageant de façon appropriée un dégagement adjacent à la zone de rupture ce dégagement s'étendant sur une valeur angulaire correspondant au débattement de la rotule également prédéfini. La valeur de ce dégagement est un compromis entre la valeur maximum de débattement angulaire de l'arbre et la longueur sphérique utile que l'homme de métier juge utile au bon fonctionnement de la rotule.

Naturellement, des revêtements et/ou bagues peuvent être prévus sur les pistes sphériques afin de faciliter le glissement et/ou la lubrification.

## Revendications

1. Boîtier de liaison (18) destiné à être interposé entre un arbre d'entraînement (8) de rotor de soufflante de moteur d'aéronef et un palier de roulement (12b) prévu pour reprendre des efforts radiaux et axiaux, ledit boîtier comportant d'une part une structure annulaire intérieure (26) destinée à être fixée sur ledit arbre d'entraînement et présentant une portée sphérique (32), et d'autre part une structure annulaire extérieure (46) destinée à être fixe par rapport à une bague intérieure dudit palier de roulement (12b), cette structure extérieure, en appui radial sur des moyens de support radial (42) prévus sur la structure intérieure (26), délimitant une piste (48) de forme complémentaire de celle de ladite portée sphérique (32) de manière à former conjointement une liaison rotule (50) maintenue dans un état bloqué par un dispositif de blocage comportant un organe de blocage (34) prévue sur la structure intérieure, cet organe de blocage faisant saillie radialement vers l'extérieur à partir de la portée sphérique (32) et pénétrant dans ladite structure extérieure, des moyens formant fusible mécanique (37) assurant la jonction entre l'organe de blocage et la portée sphérique (32), de manière à ce que ladite liaison rotule soit libérée suite à la rupture de ces moyens formant fusible,
**caractérisé en ce que** lesdits moyens de support radial (42) sont pratiqués sur ledit organe de blocage (34).

2. Boîtier selon la revendication 1, **caractérisé en ce que** ledit organe de blocage (34) assure également la rétention axiale de la structure annulaire intérieure (26) par rapport à la structure annulaire extérieure (46).

3. Boîtier selon la revendication 1 ou la revendication 2, **caractérisé en ce que** ledit organe de blocage (34) assure également la rétention de la structure annulaire intérieure (26) par rapport à la structure annulaire extérieure (46), dans la direction tangentielle.

4. Boîtier selon l'une quelconque des revendications précédentes, **caractérisé en ce que** ledit organe de blocage est une couronne (34).

5. Boîtier selon la revendication 4, **caractérisé en ce que** la couronne présente des passages traversants (36) espacés circonférentiellement les uns des autres.

6. Boîtier selon la revendication 5, **caractérisé en ce que** ledit organe de blocage (34) est agencé dans un logement (52) de la structure extérieure (46), et **en ce que** ledit dispositif de blocage comporte en outre des pattes de rétention (58) solidaires de cette structure extérieure, agencées dans ledit logement (52) et traversant lesdits passages (36) pratiqués dans la couronne.

7. Boîtier selon l'une quelconque des revendications précédentes, **caractérisé en ce que** lesdits moyens de support radial prennent la forme d'une ou plusieurs pistes cylindriques (42).

8. Boîtier selon l'une quelconque des revendications précédentes, **caractérisé en ce que** lesdits moyens formant fusible mécanique (37) prennent la forme d'un rétrécissement de section.

9. Moteur (1) d'aéronef comprenant un boîtier (18) selon l'une quelconque des revendications précédentes.

10. Moteur selon la revendication 9, caractérisé en qu'il comprend trois paliers de roulement (12a, 12b, 12c) interposés entre l'arbre d'entraînement (8) du rotor de soufflante (4) et le stator du moteur (10), ces trois paliers étant espacés axialement les uns des autres et intégrant un palier de roulement avant (12a) associé à un support de palier (14a) relié au stator du moteur par une liaison mécanique fusible (16a), ainsi qu'un palier de roulement intermédiaire (12b) monté sur l'arbre d'entraînement (8) de rotor de soufflante par ledit boîtier (18).

## Patentansprüche

1. Verbindungsgehäuse (18), das dazu bestimmt ist, zwischen einer Antriebswelle (8) eines Gebläserotors eines Flugzeugtriebwerks und einem Wälzlager (12b), welches dazu vorgesehen ist, Radial- und Axialkräfte aufzunehmen, eingefügt zu werden, wobei das Gehäuse einerseits eine ringförmige Innenstruktur (26), die dazu bestimmt ist, an der Antriebswelle befestigt zu werden, und eine kugelige Auflagefläche (32) aufweist, sowie andererseits eine ringförmige Außenstruktur (46) umfasst, die dazu bestimmt ist, gegenüber einem Innenring des Wälzlagers (12b) fest zu sein, wobei diese Außenstruktur, in radialer Anlage an an der Innenstruktur (26) vorgesehenen Mitteln zum radialen Abstützen (42), eine Spur (48) mit ergänzender Form zu derjenigen der kugeligen Auflagefläche (32) begrenzt, um gemeinsam ein Kugelgelenk (50) zu bilden, das durch eine Blockiervorrichtung, die ein an der Innenstruktur vorgesehenes Blockierorgan (34) umfasst, in einem blockierten Zustand gehalten wird, wobei dieses Blockierorgan von der kugligen Auflagefläche (32) aus radial nach außen vorspringt und in die Außenstruktur eindringt, wobei eine mechanische Sicherung bildende Mittel (37) die Verbindung zwischen dem Blockierorgan und der kugeligen Auflagefläche (32) sicherstellen, so dass das Kugelgelenk infolge des Brechens dieser eine Sicherung bildenden Mittel freigegeben wird,
**dadurch gekennzeichnet, dass** die Mittel zum radialen Abstützen (42) an dem Blockierorgan (34) ausgebildet sind.

2. Gehäuse nach Anspruch 1, **dadurch gekennzeichnet, dass** das Blockierorgan (34) auch das axiale Festhalten der ringförmigen Innenstruktur (26) gegenüber der ringförmigen Außenstruktur (46) sicherstellt.

3. Gehäuse nach Anspruch 1 oder Anspruch 2, **dadurch gekennzeichnet, dass** das Blockierorgan (34) auch das Festhalten der ringförmigen Innenstruktur (26) gegenüber der ringförmigen Außenstruktur (46) in tangentialer Richtung sicherstellt.

4. Gehäuse nach einem der vorhergehenden Ansprüche, **dadurch gekennzeichnet, dass** das Blockierorgan ein Kranz (34) ist.

5. Gehäuse nach Anspruch 4, **dadurch gekennzeichnet, dass** der Kranz Durchgänge (36), die in Umfangsrichtung voneinander beabstandet sind, umfasst.

6. Gehäuse nach Anspruch 5, **dadurch gekennzeichnet, dass** das Blockierorgan (34) in einer Aufnahme (52) der Außenstruktur (46) angeordnet ist und dass die Blockiervorrichtung ferner mit dieser Außenstruktur fest verbundene Festhaltelaschen (58) umfasst, die in der Aufnahme (52) angeordnet sind und die die in dem Kranz ausgebildeten Durchgänge (36) durchgreifen.

7. Gehäuse nach einem der vorhergehenden Ansprüche, **dadurch gekennzeichnet, dass** die Mittel zum radialen Abstützen die Form von einer oder mehreren zylindrischen Spuren (42) annehmen.

8. Gehäuse nach einem der vorhergehenden Ansprüche, **dadurch gekennzeichnet, dass** die eine mechanische Sicherung bildenden Mittel (37) die Form einer Querschnittverjüngung annehmen.

9. Triebwerk (1) eines Flugzeugs, umfassend ein Gehäuse (18) nach einem der vorhergehenden Ansprüche.

10. Triebwerk nach Anspruch 9, **dadurch gekennzeichnet, dass** es drei Wälzlager (12a, 12b, 12c) umfasst, die zwischen der Antriebswelle (8) des Gebläserotors (4) und dem Stator des Triebwerks (10) eingefügt sind, wobei diese drei Lager axial voneinander beabstandet sind und ein vorderes Wälzlager (12a), das einem Lagerträger (14a) zugeordnet ist, welcher mit dem Stator des Triebwerks über eine mechanische Sollbruchverbindung (16a) verbunden ist, sowie ein Zwischenwälzlager (12b) umfassen, das an der Antriebswelle (8) des Gebläserotors durch das Gehäuse (18) angebracht ist.

## Claims

1. A connecting module (18) intended to be interposed between a drive shaft (8) of a rotor of a fan of an aircraft engine, and a rolling-element bearing (12b) designed to transmit radial and axial forces, where the said module includes, firstly, an inner annular structure (26) intended to be attached to the said drive shaft, and having a bonnet (32), and secondly an outer annular structure (46) intended to be fixed relative to an inner ring of the said rolling-element bearing (12b), where this outer structure, radially supported on radial support means (42) installed on the inner structure (26), delimits a raceway (48) the shape of which is complementary to that of the said bonnet (32), so as to form jointly a ball-joint connection (50) kept in a blocked state by a blocking system including a blocking device (34) installed on the inner structure, where this blocking device projects radially towards the exterior from the bonnet (32), and penetrates into the said outer structure, and where means forming a mechanical fuse (37) provide the junction between the blocking device and the bonnet (32), such that the said ball-joint connection is released following the fracture of these means forming a fuse,
**characterised in that** the said radial support means (42) are fitted to the said blocking device (34).

2. A module according to claim 1, **characterised in that** the said blocking device (34) also axially retains the inner annular structure (26) relative to the outer annular structure (46).

3. A module according to claim 1 or claim 2, **characterised in that** the said blocking device (34) also retains the inner annular structure (26) relative to the outer annular structure (46), in the tangential direction.

4. A module according to any one of the previous claims, **characterised in that** the said blocking device is a ring (34).

5. A module according to claim 4, **characterised in that** the ring has through-passages (36) which are circumferentially spaced relative to one another.

6. A module according to claim 5, **characterised in that** the said blocking device (34) is fitted in a recess (52) of the outer structure (46), and **in that** the said blocking system also includes retaining tabs (58) which are securely attached to this outer structure, fitted in the said recess (52), and traversing the said passages (36) made in the ring.

7. A module according to any one of the previous claims, **characterised in that** the said radial support means take the form of one or more cylindrical raceways (42).

8. A module according to any one of the previous claims, **characterised in that** the said means forming a mechanical fuse (37) take the form of a narrowed section.

9. An aircraft engine (1) including a module (18) according to any one of the previous claims.

10. An engine according to claim 9, **characterised in that** it includes three rolling-element bearings (12a, 12b, 12c) interposed between the drive shaft (8) of the fan rotor (4) and the stator of the engine (10), where these three bearings are spaced axially relative to one another, and include a forward rolling-element bearing (12a) associated with a bearing bracket (14a) connected to the stator of the engine by a fusible mechanical link (16a), together with an intermediate rolling-element bearing (12b) installed on the drive shaft (8) of the fan rotor by the said module (18).
